# EUROPEAN PATENT SPECIFICATION

(11) **EP 3 388 974 B1**
(45) Date of publication and mention of the grant of the patent: **27.05.2020**
(21) Application number: 18166260.2
(22) Date of filing: 09.04.2018
(51) Int. Cl.: G06K 9/00, G06Q 20/34, G06Q 20/40, G07F 7/08

(54) **NEW IDENTIFICATION DOCUMENT**
NEUER AUSWEIS
NOUVEAU DOCUMENT D'IDENTIFICATION

(30) Priority: 13.04.2017 IT 201700041158
(43) Date of publication of application: 17.10.2018
(73) Proprietor: Istituto Poligrafico e Zecca dello Stato S.p.A., 00138 Roma (RM) (IT)
(72) Inventor: GHISA, Giuseppe, 00138 Rome (IT); LUCIANI, Laura, 00138 Rome (IT); INFORTUNA, Francesco Antonio, 00138 Rome (IT); GUMIERO, Andrea, 00138 Rome (IT)
(74) Representative: Papa, Elisabetta

(56) References cited:
- EP-A1- 1 326 196
- EP-A1- 2 624 206
- EP-A1- 2 693 398
- WO-A1-03/084124
- WO-A1-2010/022129
- US-B1- 6 325 285
- ANDREAS LANITIS: "A survey of the effects of aging on biometric identity verification", INTERNATIONAL JOURNAL OF BIOMETRICS, vol. 2, no. 1, 1 January 2010 (2010-01-01) , page 34, XP055451644, GB ISSN: 1755-8301, DOI: 10.1504/IJBM.2010.030415

## Description

### Technical field of the invention

The present invention relates to a portable identification [lit. recognition] device, specifically an electronic ID card, which may be used in any situation, which requires accurate identification of the holder. The document may, e.g., be in the form of a booklet or a *card,* and is preferably of a type conforming to the ICAO 9303 standard (ISO 7810: 2003).

The recognition device according to the invention is of a type suitable for memorizing one or more biometric features of the holder, and advantageously comprises one or more sensors for detecting biometric data.

### Background

Numerous solutions relative to such a document are available on the market, e.g., in the form of a *"card,"* which stores the holder's biometric identification data. The recognition process associated with these documents is based on comparing data stored with a biometric element and detected at the time of use or contained in a separate memory, e.g., a remote database. If this comparison matches up, the authentication process successfully terminates and the activity associated with the use of the document, e.g., a credit-card-based financial transaction, may be completed.

The document WO200384124A1 describes a device and a related method of use, such that, when operated as described above, biometric identification of the subject is required in order to perform a transaction.

WO9913434A1 discloses a portable device, e.g., a *card,* which contains a sensor capable of producing a user's digital profile based on a single biometric trait, in particular his/her fingerprint or DNA. A copy of this digital profile is stored within the device and is used as a comparison model each time user identification is required.

WO2010/022129 discloses a system comprising a transaction card having a biometric sensor and a terminal configured to read transaction information.

EP1326196 discloses a card configured for a fingerprint authentication. If the verification gives a positive result, the card transmits an enabling signal to a security check-point.

US6325285 relates to a card provided with a processor, a memory and a fingerprint reader.

The prior-art documents referred to above and the associated identification/authentication processes have some important disadvantages.

Primarily, their reliability is plagued problems related to *"aging"* (deterioration), which all biometric elements are subject to. In fact, the authentication process may fail, even when faced with the actual document holder, as the biometric features of such person undergo variation with time. Such variations over time are minor for some biometric features, such as, e.g., fingerprints, the iris and retina, whereas other features, such as the voice, face, hand elements and handwritten signatures may vary considerable. In general, the probability of a failure to identify the actual document holder depends, apart from the sophistication of the technology used, on the selected biometric feature, in particular, its high or low variability, as mentioned above, and the time elapsed since the initialization and issuance of the document.

A further disadvantage is that a great many prior-art document configurations are subject to tampering by malicious software, e.g., so-called *"backdoors,"* installed without the holder's knowledge and apt to allow uncontrolled access to the data contained in the document and its fraudulent use. Likewise, some known configurations lend themselves to tampering due to false biometric features that are artificially reproduced, e.g., by cloning.

Furthermore, the prior-art identification documents require fairly complex authentication processes.

Besides, the processes put in place by such prior-art documents are open to improvement as regards their ability to identify the holder and reducing the number of false identifications [lit. recognitions], or non-identifications.

What's more, the prior-art devices are configured to comprise a limited number of components, generally relying, e.g., on external sensors for detecting one or more of the subject's biometric parameters.

### Summary of the invention

Thus, the technical problem posed and solved by the present invention is to provide a portable recognition device, in particular an electronic identification document, which allows you to remove one or more of the aforementioned disadvantages of the prior art.

This problem is solved by a recognition device according to claim 1.

The preferred features of the present invention represent the subject matter of the dependent claims.

In this context, the term "electronic document" should be understood in its broadest sense to include any portable document, e.g., in the form of a *card* or booklet, preferably conforming to the ICAO 9303/ISO 7810:2003 standard, which carries the subject's identification data and comprises electronic operation means.

Likewise, the terms "identification," "recognition" or similar words are meant to signify any authentication process prior to enabling additional features or activities, regardless of how such enabling occurs.

Moreover, terms such as "biometric data" or "biometric parameters" refer to any magnitude related to or associated with the identification of the document holder, in particular fingerprints, ocular or somatic features, handwritten signature, or the like.

Likewise, the term "sensors" or similar expressions refer to any detection and/or transduction means.

The recognition document and the inventive system require that one or more biometric reference parameters of the holder, which we may also define as models or *templates,* be stored in the document itself during its initialization phase. Thus, the invention provides a diachronic [or: chronologic] process for updating these biometric reference features, and makes it possible to efficiently prevent incidents of *"aging"* of the subject's biometric profiles, thereby ensuring the proper functioning of the document throughout its useful life.

The identification document is preferably configured to store two different biometric parameters by using a detection feature incorporated in a single sensor or separate sensors. This parametric duality minimizes the risk of false biometric features being used successfully. Furthermore, it is possible - even with the said sensor, transducer or detector - to determine two correlated biometric magnitudes, e.g., digital skin resistance (by way of the so-called capacitive method) and differences in temperature between the ridges and valleys of the fingerprint (by way of the so-called thermal method). This dual or in any case multiple-parameter detection makes possible an authentication process and/or cross-updating of the said parameters.

The identification document furthermore includes a data protection system based on sectioning said document into two parts, electrically separated in the non-use modes, one holding the biometric parameter(s) and the other, various identifying or enabling data of the subject for interaction with a reading device. Advantageously, the first part enables the operation of the second by means of a "disconnector" element, which, e.g., activates or shares a radio-frequency antenna, but only when the biometric identification process has successfully completed.

The configuration of the recognition device and the system, which is the subject matter of the present invention, is therefore such that if the said device is used by a person other than the holder, it will result in a failure to recognize the biometric features. Consequently, the part of the recognition device configured to interact with a remote reader will remain physically isolated and it will therefore be impossible to use the device for the activity for which it was intended. This characteristic has proven particularly advantageous, as it makes impossible to introduce malicious software into the document, and allowing it to run there, including in the holder's absence. Also, this particular configuration prevents unauthorized access to the data stored in the document.

Other advantages, characteristics and application methods of the present invention will become apparent from the following detailed description of some of its embodiments, presented by way of non-limiting examples.

### Brief description of the figures

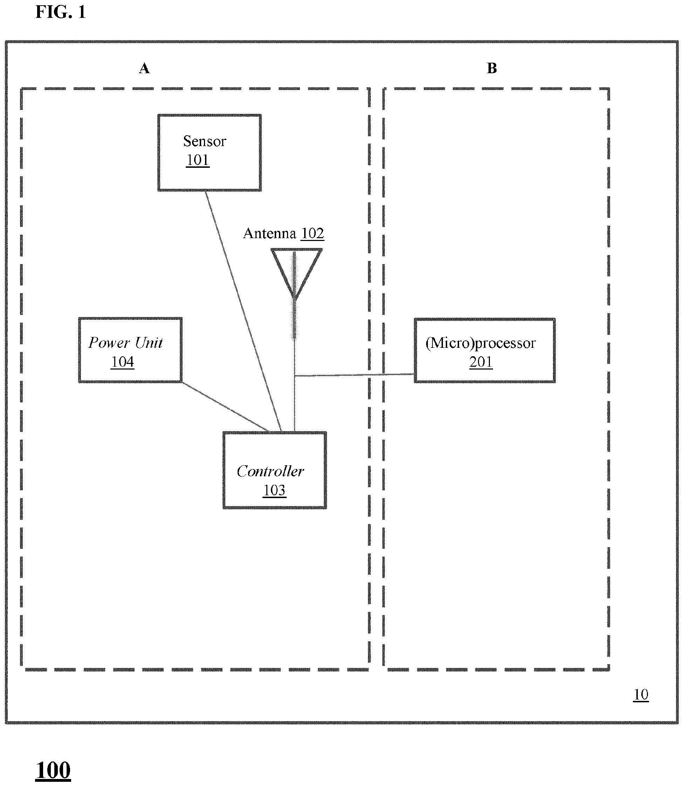

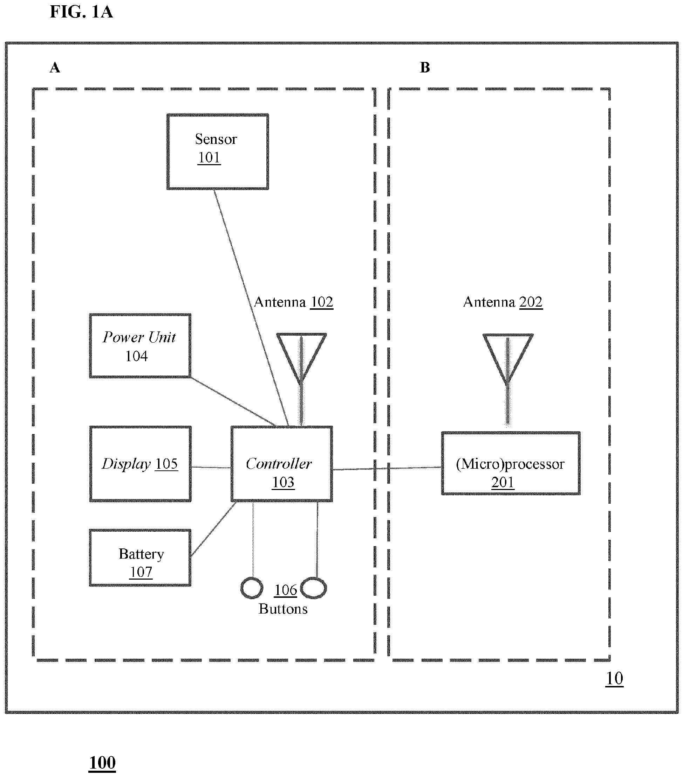

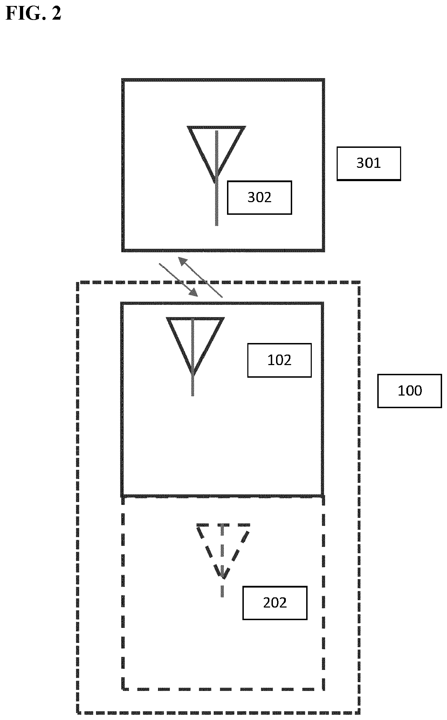

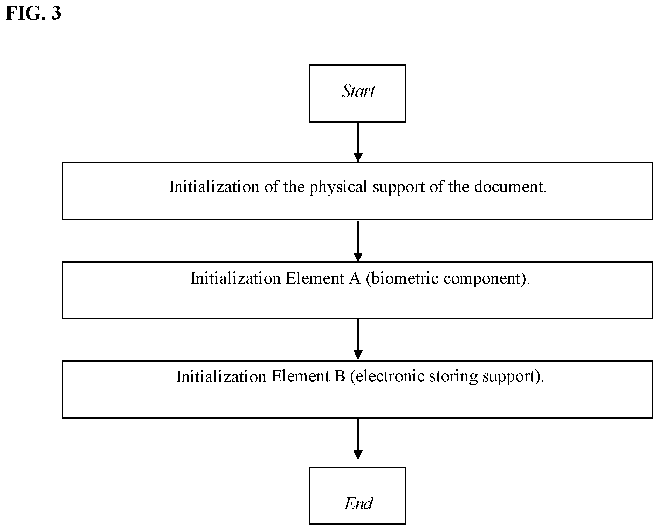

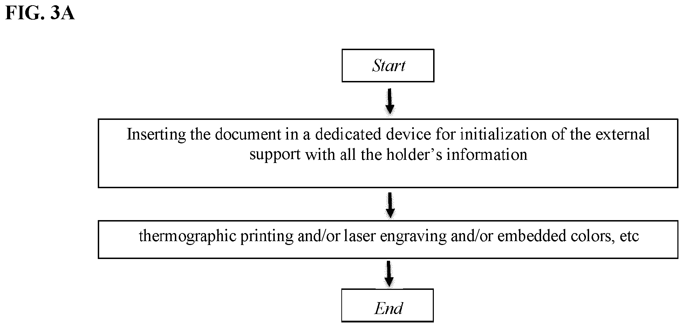

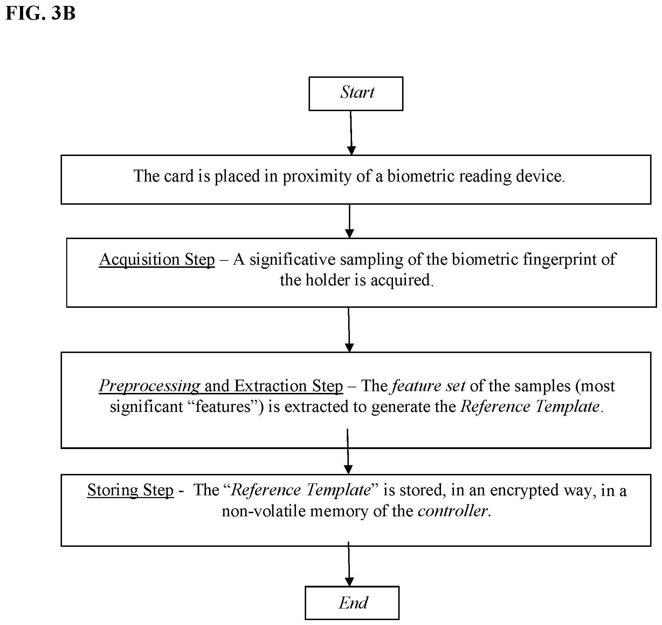

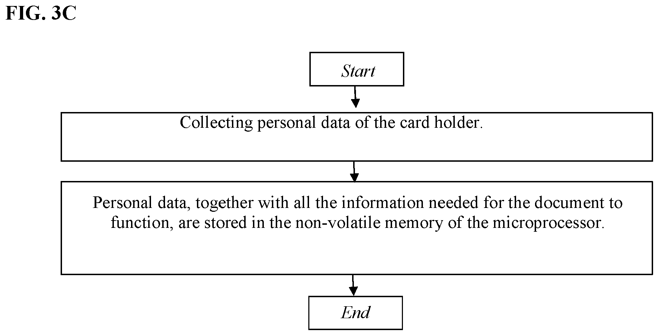

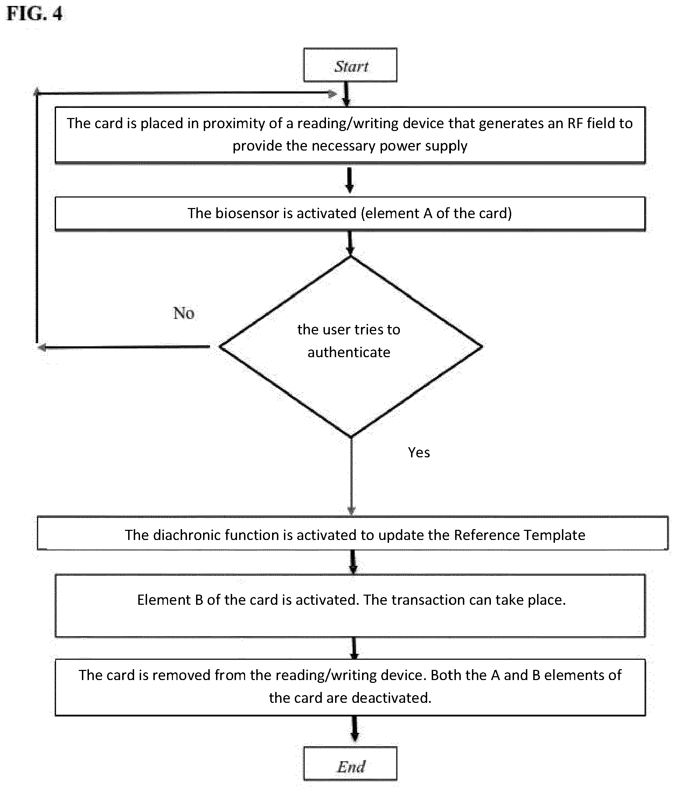

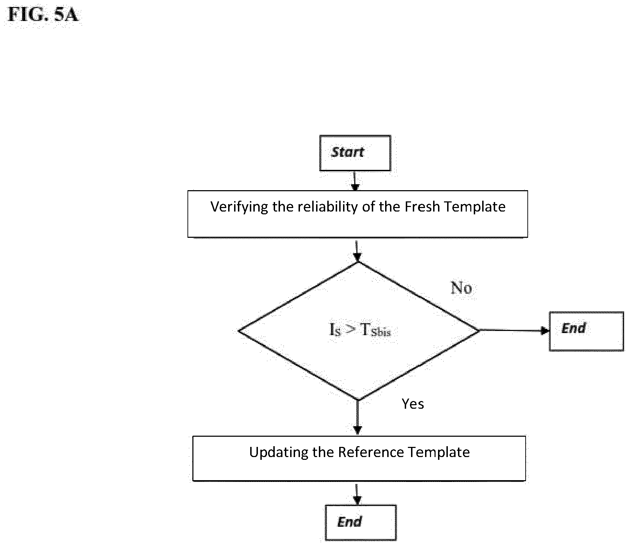

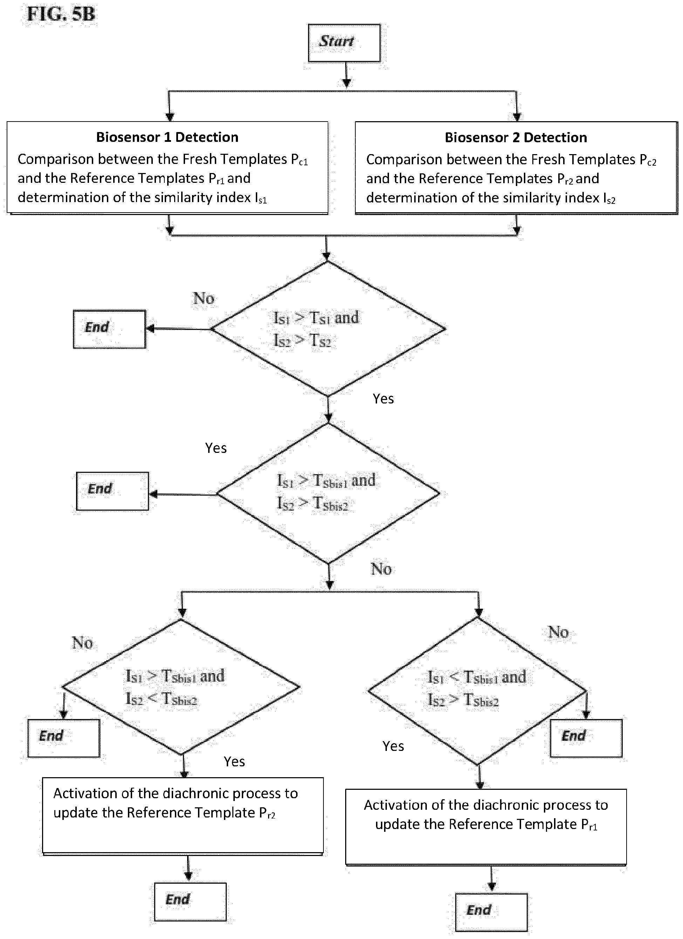

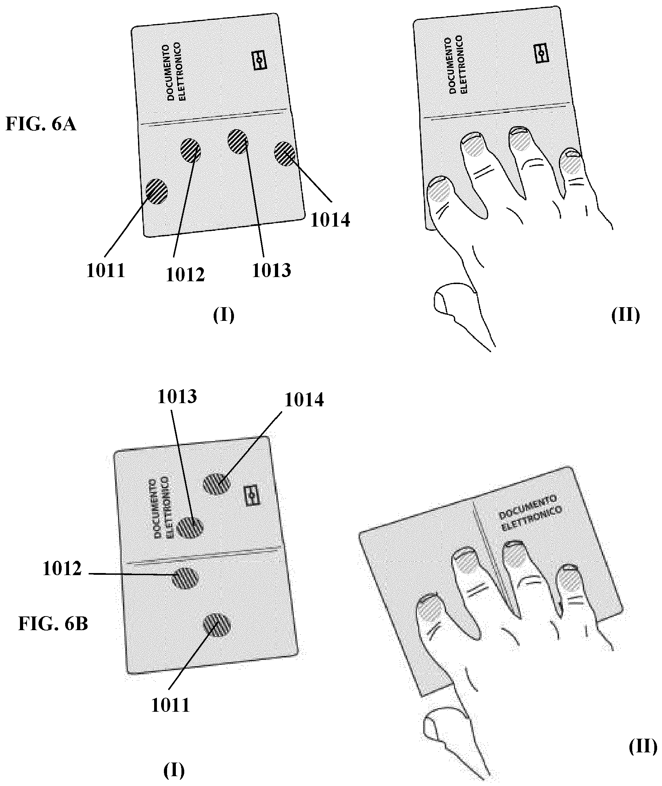

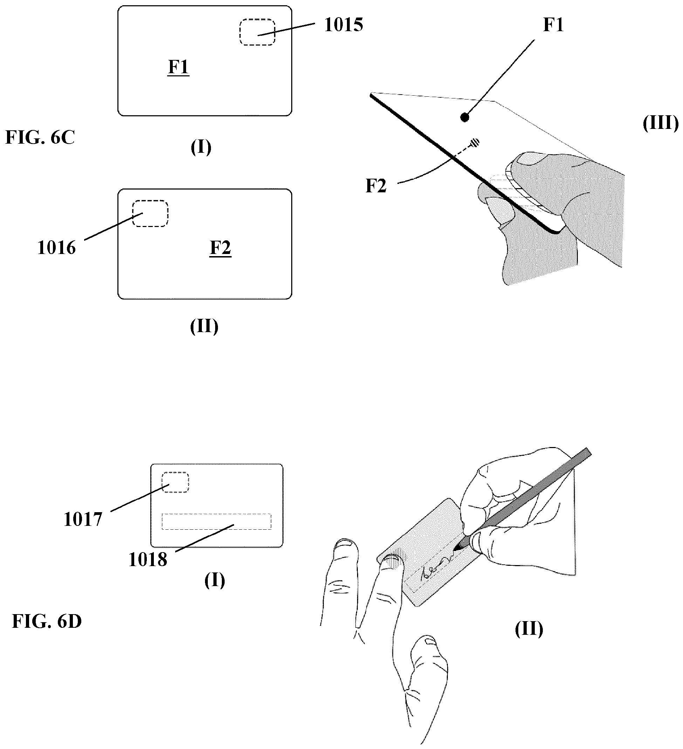

Reference will be made to the figures of the accompanying drawings, in which:
▪ Fig. 1 shows a schematic diagram of a preferred embodiment of an identification document according to the present invention;
▪ Fig. 1A shows a schematic diagram of an alternative embodiment of the identification document in Fig. 1;
▪ Fig. 2 shows a schematic diagram relating to *contactless* interaction between the document in Fig. 1 or 1A and a reading and/or writing device;
▪ Fig. 3 shows a schematic flow diagram of a preferred initialization sequence of the document in Fig. 1 or 1A;
▪ Fig. 3A shows a schematic flow diagram related to a preferred initialization mode of an external support of the document in Fig. 1 or 1A;
▪ Fig. 3B shows a schematic flow diagram related to a preferred initialization mode of a first part of the document in Fig. 1 or 1A;
▪ Fig. 3C shows a schematic flow diagram related to a preferred initialization mode of a second part of the document in Fig. 1 or 1A;
▪ Fig. 4 shows a schematic flow diagram related to a preferred mode of operation of the document in Fig. 1 or 1A;
▪ Fig. 5A shows a schematic flow diagram related to preferred embodiments of a diachronic process associated with the document of Fig. 1 or 1A;
▪ Fig. 5B shows a schematic flow diagram related to preferred embodiments of a diachronic process performed by way of mutual certification;
   ▪ Figs. 6A to 6D are each a schematic representation of a corresponding alternative embodiment of the document in Fig. 1, with specific reference to the positioning of biosensors, i.e., sensors for detecting one or more biometric parameters. In particular, in image (I), Figs. 6A and 6B represent a front view of a recognition document in booklet format and, in image (II), the same document during an identification process, the said figures referring to two different preferred configurations; Fig. 6C, in images (I) and (II), shows plan views of two corresponding opposing main surfaces of a recognition document in card format and, in image (III), the same document during an identification process; Fig. 6D, in image (I), shows a plan view of an identification document in card format and, in image (II), the same document during an identification process.

### Detailed description of the preferred embodiments

With initial reference to Fig. 1, a portable recognition device according to a preferred embodiment of the invention is generally indicated with reference numeral 100. In the present example, device 100 represents an electronic identification document in the so-called *card* format or in the form of a booklet.

Document 100 comprises a support or physical substrate indicated by reference numeral 10, upon or within which, the further components described below are incorporated.

Preferably, document 100 comprises two separate parts, or elements, indicated by A and B. In particular, the first element A may be defined as a biometric recognition element and is responsible for identifying the holder and enabling element B which, when in non-use mode, is electrically disconnected from the element A.

Element B may be defined as an element for electronic storage of the holder's data and for interaction with the external means in order to perform the operation for which the document is intended.

It is obvious that the two parts A and B may correspond to a physical partition of the device 100, in particular of its support 10, or be separate from a purely functional and/or activation aspect.

The biometric recognition element A may comprise one or more biometric sensors 101, or biosensors, configured to detect one or more current biometric parameters, which we may indicate by P_{c}, or one or more magnitudes associated therewith. In the present example, the biometric parameter(s) Pc may represent one or more of the following identifying elements of the document holder 100: fingerprint, iris, retina, voice, facial image, hand elements, handwritten signature.

In a particularly preferred embodiment, the sensors 101 are configured to detect biometric features associated with so-called first and second level physical magnitudes, e.g., for measuring the skin resistance of a finger (with the so-called capacitive method) and the temperature differences between the ridges and valleys of the fingerprint (with the so-called thermal method). These first and second level magnitudes can be detected by conventional sensor means.

In the present example, the biometric recognition element A further comprises communication means 102 with a remote reading or reading/writing device 301, whereby the latter is shown schematically in Fig. 2. In the present example, the means 102 comprise a radio-frequency (RF) circuit or antenna, which allows the element A to operate with RFID technologies.

In the present embodiment, the antenna 102 powers the sensor(s) 101, utilizing the RF energy generated by an external source, in particular the above writing/reading device 301.

The aforesaid antenna also provides communication between a *controller* 103, which will be introduced below, and the writing/reading device 301. The communication can be implemented using data encryption technologies.

Alternative embodiments may require the communication means 102 to comprise different elements or antennas for separate implementation of the above communication features related to the remote device 301, powering the internal components of the document 100, etc.

The biometric recognition element A preferably also comprises a power unit 104, in communication with the communication means 102 and configured for the conversion and management of RF power. In particular, unit 104 is configured to convert RF energy to electrical energy, and control the storage and distribution of this electrical energy to the other components of document 100.

Hence, the biometric recognition element A comprises processing means, or a control unit, 103, in particular a *controller*/microprocessor, e.g., of the ASIC (*Application Specific Integrated Circuit*) chip type. The processing means 103 are in communication, and control the other components of the element A introduced thus far. In the present example, the processing means 103 also incorporate means for storing at least one biometric reference parameter, which we shall indicate by P_{R}, of the document holder 100 according to modalities, which will be illustrated below.

In the present embodiment, element B for electronic storage of the holder's data comprises a processor or a microprocessor 201, or other means of processing, storage and/or communication configured to interact with device 301.

In the current example, microprocessor 201 is configured for storing the holder's personal data and/or access keys for interaction with the device 301, depending on the intended use of document 100. Microprocessor 201 communicates with the processing means 103 and is particularly configured to be activated by the latter. In the present example, this activation involves sharing the antenna 102 for power-supply purposes, as well as preferably bidirectional communication between the devices 100 and 301.

With reference to Fig. 1A, in an alternative embodiment, element B furthermore comprises a dedicated antenna 202 for the microprocessor 201.

In addition, based on a further alternative embodiment, also shown in Fig. 1A, element A also comprises a battery 107, a solar panel and/or a separate energy source for powering at least the processing means 103.

Furthermore, according to possible alternative embodiments, the device 100, for example, in correspondence with the element A, may include a display 105, particularly configured to provide information on the status of the device 100 or of an associated identification procedure.

Similarly, the device 100 may include input means 106, in particular one or more (push)buttons allowing an operator to perform selections.

In a preferred operating mode, the display 105 may provide information related to the authentication outcome or a particular activity carried out by the device 100 by possibly interacting with the buttons 106.

The buttons 106 may interact with the other components of the device 100, typically by the means 103, to provide commands related to the activities carried out by the device 100. For example, these may activate the visualization of information via display 105.

Fig. 2 shows an instance of interaction, in particular *contactless* interaction, between the device 100 and the above reading device 301.

In alternative embodiments, the device 301 may indeed be a reading and/or writing device, and/or a power supply device. In the current example, the device 301 is configured for:
▪ Providing radiofrequency energy to the antenna 102 in order to activate the biosensor(s) 101 of the element A by generating an RF field;
▪ Establishing a connection of the element B with the microprocessor 201 (e.g., by two-way communication) in order to exchange data/information;
▪ Performing possible further read/write operations on the memory of the processing means 103 and/or additional storage means provided in the microprocessor 201.

Preferred modes of operation of the device 100 will now be described with reference to preliminary initialization procedures, as well as the operation of the device 100 in an identification process. In the following example, the device 100 is configured to operate with biometric parameters consisting of two of the cardholder's biometric imprints, in particular a fingerprint detected by two different methodologies (e.g., the capacitive method and the thermal method).

With reference to Fig. 3, an initialization procedure for each of the three elements of the document is provided at the same time as the document is issued. The three initialization procedures, relating to the physical support 10, the biometric recognition element A, and the element for electronically storing holder B's data, respectively, can be performed sequentially, simultaneously, or in no particular order. These initialization procedures are primarily intended to associate the document 100 with its owner.

In the current example and with reference to Fig. 3A, the initialization of the physical support 10 provides personalization of the holder's information, e.g., applied in graphical form by way of printing, in particular thermographic printing, *laser engraving, embedded* colors, etc.

With reference to Fig. 3B, during the user registration or *enrollment* phase, the initialization of element A (a biometric component) requires obtaining a sampling of each of the holder's biometric fingerprints, i.e., by using a dedicated acquisition device [1].

This *enrollment* phase may be done, e.g., by using the four steps explained below.
(i) Data acquisition - using the sensor(s) 101 of a dedicated detection apparatus, a sufficient sampling is acquired for each biometric fingerprint of interest to constitute a statistically valid data set [1].
*(ii) Extraction of features* - each acquired detection is subjected to preprocessing treatment using:
   - An *"enhancement-quality"* algorithm [2] in order to enhance sample quality and reduce noise;
   - a *"features extraction"* algorithm [3] for the extraction of the most significant features ("*feature set*") of the discriminating samples for the recognition and transformation of these features into a digital representation (*template*)*,* e.g., the most significant features are extracted from the fingerprints, i.e., the discontinuities of the ridge/valley structure ("*minutiae*"), and digitally represented as a binary code.
(iii) Definition of the *"Reference Templates",* i.e., the biometric reference parameter(s) P_{R} - For each biometric parameter, the set of *"Templates"* produced by the detections will constitute the *"Reference Template."* The "Reference Templates" will be used as comparison elements during the holder identification phase.
(iv) Storing the *"Reference Template(s)"* - The *"Reference Templates"* are stored in an encrypted fashion in the non-volatile memory of the processing means 103 using encryption algorithms [4] [5] [6] (e.g., standard 192 or 256-bit AES symmetric encryption algorithms with SHA-256 hash function or 112-bit 3DES with SHA-1 hash function).

With reference to Fig. 3C, the initialization of element B (an electronic storage device) is done by storing the holder's data in the nonvolatile memory of the microprocessor 201, along with all the information needed for the document 100 to function.

As mentioned above, the three initialization phases explained above may be performed simultaneously, or at separate times.

Following initialization, document 100 is ready to use. A preferred procedure for use in an identification process is explained below with reference to Fig. 4.

### Activation of the biosensor(s) 101

Part A of the device 100 obtains the required power through the power unit 104, as soon as the said device 100 and, in particular, its antenna 102 is placed in proximity to the device 301, which generates an RF field. The sensor(s) 101, [when] powered, are activated and ready for biometric detection. Alternatively, the energy may be supplied by the battery 107, if present.

### Creation of the "Fresh Template" or current biometric parameter P_{C}

The holder proceeds with the acquisition of his/her biometric imprints using the sensor 101 of the device 100. The newly detected imprints are subjected to *preprocessing* and digitized, and constitute the *Fresh Templates* (one for each type of imprint) or current biometric parameters P_{C}. The *Fresh Templates* are stored in the memory of the processing device 103 and made available for subsequent identification activity.

### Identification/recognition

Through a similarity search algorithm (which we may define as *template matching*) [7], a comparison is made for each type of imprint between the *Fresh Template* Pc and the *Reference Template* P_{R}, whereupon a simulation index Sᵢ is determined, which we may also define as a global score or *match score,* and which indicates the overall similarity.

As the biometric systems generally do not provide a 100% *match,* the simulation index S_{I} is compared with a pre-fixed threshold T_{S}. If the similarity index S_{I} for each type of imprint is greater than [the value of] the relevant preset threshold T_{S}, the authentication is considered to have successfully completed. [The value of] This threshold T_{S} is established such as to limit the rate of false rejections or "false negatives" and to zero out false acceptances or "false positives."

In the event of positive authentication, the processing means 103 activate the operation of the antenna 102, including microprocessor 201, which is otherwise disabled with respect to the latter. The antenna 102 powers the microprocessor 201 of element B of the device 100, whereupon communication with the reading device 301 can start. Document 100 may therefore be used according to its purpose.

When the application activity is completed, the document 100 is removed from the device 301 and the functionality [operation] of the antenna 102 returns to its initial disabled state. Thus, the processor 201 data are no longer available in any way, until further use.

Moreover, in the event of positive authentication, a diachronic process can always be activated inside the device for possible updating the *Reference Template* P_{R}. This process will be described below.

In the event of negative authentication, i.e., if the similarity index S_{I} is lower than the prefixed value T_{S} for at least one of the detected biometric parameters, authentication is considered not to have successfully completed and, therefore, the document cannot be used for its [intended] purpose, since the part, part B [typo], of the document (processor 201) is inaccessible. The user must remove the document 100 from the device 301 in order to disable the said document 100, and possibly restart the authentication process.

The diachronic process for updating the *Reference Template* P_{R} is described below.

As mentioned above, the holder's biometric elements may undergo an aging process during the useful life of document 100. A static *Reference Template* P_{R} does not take these variations into account and, over time, may no longer fully represent [∼reflect] the document holder 100. Consequently, over time, this could result in errors during the document holder 100 recognition phase and affect its utilization.

To ensure that the *Reference Template* P_{R} continues to be fully representative of the user, the use of algorithms that are able to continuously update it, while using the document, is advantageous.

The diachronic process may be activated each time the user is positively identified, and follows the main steps described below.

### Verifying the reliability of acquisitions

The *Fresh Template* P_{C} for each of the detected biometric parameters is considered reliable for the diachronic process, only if the comparison with the relevant Reference Template P_{R} generates a similarity index exceeding a second prefixed threshold T_{Sbis}, which is generally higher than the T_{S} threshold used to identify the holder (Fig. 5A). This threshold may be chosen sufficiently high so as to exclude "false negatives," i.e., false acceptances, and sufficiently low to allow for the variations of the detected biometric characteristics to be identified.

### Updating the Reference Template P_{R}

If document 100 requires two or more biometric detections, updating the *Reference Template* P_{R} is done only if the reliability of at least one of the *Fresh Templates* P_{C} is verified, i.e., if at least one of the templates exceeds the relevant threshold T_{Sbis} and all the others have exceeded the threshold T_{S}. Below follow some useful criteria by way of some non-limiting examples that may be used based on the relatively high variability of the applied biometric imprints, the desired degree of security to be achieved, and the specific circumstances.
(i) Independent updating of each *Reference Template* P_{R} corresponding to the *Fresh Template* P_{C}, whose reliability has been verified.
(ii) Updating through mutual certification, i.e., if the reliability of the first *Fresh Template* P_{C} is verified, [and] the *Reference Template* PR is updated relative to the other biometric imprint(s), and vice versa, as shown in Fig. 5B.
(iii) Updating all the *Reference Templates* P_{R} [is done] only if the reliability of all the *Fresh Templates* P_{C} are verified.
(iv) Updating the *Reference Template* P_{R} [is done] only if the reliability of the *Fresh Templates* P_{C} have been verified and further boundary conditions, possibly of a statistical kind, are simultaneously verified.

Updating the *Reference Template*(s) may be done by the processing means 103 using algorithms selected according to the types of applied biometric imprints. Such algorithms may be, e.g., of the following type[s]: *"Random replacement,"* i.e., random replacement of one of the *"Templates,"* constituting the *Reference Template* P_{R}, with the *Fresh Template* P_{C}; *"FIFO replacement,"* whereby the older *"Template"* is replaced, constituting the *Reference Template* P_{R}; *"NAIVE replacement,"* in which the *Fresh Template* Pc replaces the most similar one in the *Reference Template* P_{R} [7] [8] [9].

Alternative embodiments may require that the storage of the current PC parameter(s) and/or its/their comparison with the reference parameter(s) P_{R} be performed at the level of a device separate from the document 100, possibly a remote device or the same device 301, as described above, rather than using components that are incorporated into document 100.

Figs. 6A to 6D refer to alternative embodiments of the recognition document considered thus far, which will be described below [but] only in relation to the additional features and what has been described thus far. In all the described alternative embodiments, the recognition document is configured to detect multiple biometric parameters, e.g., a plurality of the holder's fingerprints, to make it possible for said document to interact with a remote reading device.

Image (I) of Figs. 6A and 6B show an electronic identification document in the form of a booklet, e.g., a passport. As sensor means, the document carries four biosensors 1011-1014 arranged at a back cover of the booklet. In particular, the biosensors are positioned on outlet areas of the said document at the time of automatic authentication (e.g., at an electronic gate).

The document, including in image (II) illustrating its methods of use, is shown in an open configuration, which allows for automatic reading of one of its *"Machine Readable Zones"* associated with an internal data page, at a border-crossing point. To this end, the document is held firmly against a reading device, corresponding to the remote device introduced above, and at the fingertips of the hand. The four biosensors 1011-1014 positioned at the fingertips acquire the fingerprints that authenticate the document holder in order to enable the verification operation, i.e., interaction with the reading device.

Images (I) and (II) of Fig. 6C shows an electronic identification document in the form of a card, e.g., an ID card or a driver's license. As sensor means, the document has two fingerprint detectors 1015 and 1016, one for each opposing main surface F1 and F2 of the *card.* Thus, the document can be effectively held between the thumb and index finger, when performing authentication of the holder as depicted in image (III), i.e., when interacting with a remote reading device.

Image (I) of Fig. 6C shows an alternative electronic identification document in the form of a *card,* e.g., an ID card or a driver's license. The document is configured with a fingerprint detector 1017 and a signature detector 1018, arranged such as to enable the authentication operation. In fact, the holder is able to digitally sign the document with one hand while firmly holding the *card* with the other hand's index finger.

The present invention has thus far been described with reference to preferred embodiments. It is to be understood that other embodiments may exist and which belong to the same inventive core, as defined by the scope of the claims set forth below.

### Literature:

[1] D Maltoni, D Maio, AK Jain, and S Prabhakar, Handbook of Fingerprint: Recognition (2nd Edition), Springer, 2009
[2] L Hong, Y Wan, AK Jain, "Fingerprint Image Enhancement Algorithms and Performance Evaluation", IEEE Transactions on Pattern Analysis: and Machine Intelligence, vol. 20, no. 8, pp. 777-789, 1998.
[3] NK Ratha, SY Chen, AK Jain, "Adaptive Flow Orientation-based Feature Extraction in Fingerprint Images", Pattern Recognition, vol. 28, No. 11, pp. 1657-1672, 1995.
[4] ICAO 9303 2015
[5] Advanced Encryption Standard, searchsecurity.techtarget.com
[6] Crittografia a chiave simmetrica [Symmetric Key Cryptography], cs.cornell.edu.
[7] Kumar, D Ashok, and T Ummal Sariba Begum. "A Comparative Study on Fingerprint Matching Algorithms for EVM." Journal of Computer Sciences and Applications 1.4 (2013): 55-60.
[8] T Scheidat, A Makrushin, and C Vielhauer, Automatic Template Update Strategies for Biometrics, Tech. Rep., Otto-von-Guericke University Magdeburg, 2007. [cired ar p. 48, 53]
[9] Strategies for Biometrics, Tech. Rep., Otto-von-Guericke University Magdeburg,2007.

## Claims

1. An electronic identification document (100) in the form of a card or booklet, comprising :
- a physical support (10);
- a control unit (103) incorporating means for storing at least one reference biometric parameter (P_{R}) of a holder of the electronic identification document (100);
- sensor means (101), configured to detect at least one current biometric parameter (P_{C});
- communication means (102);
- a power unit (104);
- a processor (201) configured to interact with a remote device (301), read data from, write data on and/or power said electronic identification document (100) and store holder's personal data for interaction with the remote device (301);
wherein the control unit is (103) programmed to:
a) comparing said biometric reference parameter (P_{R}) with said current biometric parameter (P_{C}) and calculating a similarity index (I_{S});
b) comparing said similarity index (I_{S}) with a first predetermined threshold (T_{S}), and, in case said similarity index (I_{S}) is greater than said first predetermined threshold (T_{S}), enabling said processor (201) to an interaction with the remote device (301);
and it is **characterized in that**:
c) in the event said similarity index (I_{S}) is greater than a second predetermined threshold (T_{Sbis}) higher than said first predetermined threshold (T_{S}), updating said reference biometric parameter (P_{R}) with said current biometric parameter (P_{C}) in said storage means;
which electronic identification document (100) presents a partition in a first (A) and a second (B) part, wherein said first part (A) bears said sensor means (101), said communication means (102), said control unit (103) and said power unit (104) and said second part (B) bears said processor (201),
wherein said second part (B) bears additional storage means of identification data of the holder of the document itself and/or access keys for interaction with the remote device (301),
and wherein said control unit (103) is configured to allow an enabling of said communication means (102) between said first (A) and said second (B) part and/or between said second part (B) and the remote device (301) in said step (b).

2. The electronic identification document (100) according to claim 1, wherein said communication means (102) comprises at least one radiofrequency antenna or circuit.

3. The electronic identification document (100) according to claim 1 or 2, wherein said communication means (102) are configured for powering said processing means (103) and/or said sensor means (101).

4. The electronic identification document (100) according to any one of the preceding claims, wherein said reference biometric parameter (P_{R}) and said current biometric parameter (P_{c}) are representative of one or more of the following elements: fingerprint, iris, retina, voice, facial image, skin resistance, handwritten signature.

5. The electronic identification document (100) according to any one of the preceding claims, wherein said storage means (103) is configured to store at least a pair of distinct reference biometric parameters (P_{R}) and wherein said steps from (a) to (c) are carried out in relation to each of said reference biometric parameters (P_{R}) and to a respective pair of current biometric parameters (P_{c}).

6. The electronic identification document (100) according to any one of the preceding claims, wherein said sensor means comprises detecting means of two correlated current biometric parameters, for example a digital skin resistance and a temperature difference between ridges and valleys of a corresponding fingerprint.

7. The electronic identification document (100) according to the preceding claim, wherein said processing means (103) is configured to execute a cross authentication of said correlated current biometric parameters.

8. The electronic identification document (100) according to any one of the preceding claims, which is in the card form and wherein said sensor means (101) comprises a first (1015) and a second (1016) fingerprint detector placed at opposing sides.

9. The electronic identification document (100) according to any one of the preceding claims which is in the card form and wherein said sensor means (101) comprises a fingerprint detector (1017) and a handwritten signature detector (1018), preferably placed at the same side.

10. The electronic identification document (100) according to any one of the claims from 1 to 9, which is in the booklet form and wherein said sensor means (101) comprises a plurality of fingerprint detectors (1011-1014) placed at a back cover.

11. An identification system, comprising:
▪ an electronic identification document (100) according to any one of the preceding claims; and
▪ a remote device (301), configured to read data from, write data on and/or power said electronic identification document (100).

12. The identification system according to the preceding claim, wherein the remote device is configured for:
▪ providing radiofrequency energy to communication means (102) of said electronic identification document (100) in order to activate enabling of said sensor means (101);
▪ establishing a connection with said processor (201) in order to exchange data and/or information; and
▪ performing read/write data operations on said communication means (102) and/or said control unit (103) and/or said processor (201).

## Patentansprüche

1. Elektronisches Identifikationsdokument (100) in der Form einer Karte oder eines Heftes, umfassend:
- einen physikalischen Träger (10);
- eine Steuereinheit (103), die Mittel zum Speichern von wenigstens einem biometrischen Referenzparameter (P_{R}) eines Halters des elektronischen Identifikationsdokuments (100) enthält;
- Sensormittel (101), die konfiguriert sind, um wenigstens einen aktuellen biometrischen Parameter (P_{C}) zu erfassen;
- Kommunikationsmittel (102);
- eine Energieversorgungseinheit (104);
- einen Prozessor (201), der konfiguriert ist, um mit einem Ferngerät (301) zu interagieren, Daten von dem elektronischen Identifikationsdokument (100) zu lesen, Daten darauf zu schreiben und/oder es mit Energie zu versorgen und persönliche Daten des Halters für eine Interaktion mit dem Ferngerät (301) zu speichern;
wobei die Steuereinheit (103) programmiert ist zum:
a) Vergleichen des biometrischen Referenzparameters (P_{R}) mit dem aktuellen biometrischen Parameter (P_{C}) und Berechnen eines Ähnlichkeitsindexes (I_{S});
b) Vergleichen des Ähnlichkeitsindexes (I_{S}) mit einer ersten vorbestimmten Schwelle (T_{S}) und, wenn der Ähnlichkeitsindex (I_{S}) größer als die erste vorbestimmte Schwelle (T_{S}) ist, Befähigen des Prozessors (201), eine Interaktion mit dem Ferngerät (301) auszuführen;
**dadurch gekennzeichnet, dass**
c) in dem Fall, dass der Ähnlichkeitsindex (I_{S}) größer als eine zweite vorbestimmte Schwelle (T_{Sbis}) ist, die höher als die erste vorbestimmte Schwelle (T_{S}) liegt, Aktualisieren des biometrischen Referenzparameters (P_{R}) mit dem aktuellen biometrischen Parameter (P_{C}) in den Speichermitteln;
wobei das elektronische Identifikationsdokument (100) eine Partition in einem ersten (A) und einem zweiten (B) Teil darstellt, wobei der erste Teil (A) die Sensormittel (101), die Kommunikationsmittel (102), die Steuereinheit (103) und die Energieversorgungseinheit (104) trägt und der zweite Teil (B) den Prozessor (201) trägt,
wobei der zweite Teil (B) zusätzliche Speichermittel für Identifikationsdaten des Halters des Dokuments selber und/oder Zugangsschlüssel für eine Interaktion mit dem Ferngerät (301) trägt,
und wobei die Steuereinheit (103) konfiguriert ist, um eine Befähigung der Kommunikationsmittel (102) zwischen dem ersten (A) und dem zweiten (B) Teil und/oder zwischen dem zweiten Teil (B) und dem Ferngerät (301) in dem Schritt (b) zu ermöglichen.

2. Elektronisches Identifikationsdokument (100) nach Anspruch 1, wobei die Kommunikationsmittel (102) wenigstens eine Funkfrequenzantenne oder eine Schaltung umfassen.

3. Elektronisches Identifikationsdokument (100) nach Anspruch 1 oder 2, wobei die Kommunikationsmittel (102) konfiguriert sind, um die Verarbeitungsmittel (103) und/oder die Sensormittel (101) mit Energie zu versorgen.

4. Elektronisches Identifikationsdokument (100) nach einem der vorhergehenden Ansprüche, wobei der biometrische Referenzparameter (P_{R}) und der aktuelle biometrische Parameter (P_{C}) repräsentativ für eines oder mehrere der folgenden Elemente sind: Fingerabdruck, Iris, Netzhaut, Stimme, Portrait, Hautwiderstand, handgeschriebene Unterschrift.

5. Elektronisches Identifikationsdokument (100) nach einem der vorhergehenden Ansprüche, wobei die Speichermittel (103) konfiguriert sind, um wenigstens ein Paar verschiedener biometrischer Referenzparameter (P_{R}) zu speichern und wobei die Schritte (a) bis (c) in Bezug auf jeden der biometrischen Referenzparameter (P_{R}) und bezüglich eines jeweiligen Paars von aktuellen biometrischen Parametern (P_{C}) ausgeführt werden.

6. Elektronisches Identifikationsdokument (100) nach einem der vorhergehenden Ansprüche, wobei die Sensormittel Erfassungsmittel für zwei korrelierte aktuelle biometrische Parameter umfassen, zum Beispiel einen digitalen Hautwiderstand und einen Temperaturunterschied zwischen Kämmen und Tälern eines entsprechenden Fingerabdrucks.

7. Elektronisches Identifikationsdokument (100) nach dem vorhergehenden Anspruch, wobei die Verarbeitungsmittel (103) konfiguriert sind, um eine Kreuzauthentifizierung der korrelierten aktuellen biometrischen Parameter auszuführen.

8. Elektronisches Identifikationsdokument (100) nach einem der vorhergehenden Ansprüche, welches in der Kartenform ist, wobei die Sensormittel (101) einen ersten (1015) und einen zweiten (1016) Fingerabdruckdetektor umfassen, die auf entgegengesetzten Seiten angeordnet sind.

9. Elektronisches Identifikationsdokument (100) nach einem der vorhergehenden Ansprüche, welches in der Kartenform ist, wobei die Sensormittel (101) einen Fingerabdruckdetektor (1017) und einen Detektor für eine handgeschriebene Unterschrift (1018) umfassen, vorzugsweise auf derselben Seite angeordnet.

10. Elektronisches Identifikationsdokument (100) nach einem der Ansprüche 1 bis 9, welches in der Heftform ist, wobei die Sensormittel (101) eine Vielzahl von Fingerabdruckdetektoren (1011 bis 1014) umfassen, die auf einer hinteren Abdeckung angeordnet sind.

11. Identifikationssystem, umfassend:
▪ ein elektronisches Identifikationsdokument (100) nach einem der vorhergehenden Ansprüche; und
▪ ein Ferngerät (301), das konfiguriert ist, um Daten von dem elektronischen Identifikationsdokument (100) zu lesen, Daten darauf zu schreiben und/oder es mit Energie zu versorgen.

12. Identifikationssystem nach dem vorhergehenden Anspruch, wobei das Ferngerät konfiguriert ist zum:
▪ Bereitstellen von Funkfrequenzenergie für Kommunikationsmittel (102) des elektronischen Identifikationsdokuments (100) zum Aktivieren einer Befähigung der Sensormittel (101);
▪ Aufbauen einer Verbindung mit dem Prozessor (201) zum Austauschen von Daten und/oder Information; und
▪ Ausführen von Schreib/Lese-Datenoperationen auf den Kommunikationsmitteln (102) und/oder der Steuereinheit (103) und/oder dem Prozessor (201).

## Revendications

1. Document d'identification électronique (100) sous la forme d'une carte ou d'un livret, comprenant :
- un support physique (10) ;
- une unité de commande (103) intégrant un moyen destiné à stocker au moins un paramètre biométrique de référence (P_{R}) d'un titulaire du document d'identification électronique (100) ;
- des moyens formant capteurs (101) conçus pour détecter au moins un paramètre biométrique actuel (P_{C}) ;
- des moyens de communication (102) ;
- une unité d'alimentation (104) ;
- un processeur (201) conçu pour interagir avec un dispositif distant (301), lire des données sur ledit document d'identification électronique (100), y écrire des données et/ou l'alimenter et stocker des données personnelles du titulaire à des fins d'interaction avec le dispositif distant (301) ;
dans lequel l'unité de commande (103) est programmée pour :
a) comparer ledit paramètre biométrique de référence (P_{R}) avec ledit paramètre biométrique actuel (P_{C}) et calculer un indice de similitude (I_{S}) ;
b) comparer ledit indice de similitude (I_{S}) avec un premier seuil prédéterminé (Ts) et, dans le cas où ledit indice de similitude (I_{S}) est supérieur audit premier seuil prédéterminé (T_{S}), autoriser ledit processeur (201) à une interaction avec le dispositif distant (301) ;
et elle est **caractérisée par** :
c) dans le cas où ledit index de similitude (I_{S}) est supérieur à un second seuil prédéterminé (T_{Sbis}) plus élevé que ledit premier seuil prédéterminé (T_{S}), la mise à jour dudit paramètre biométrique de référence (P_{R}) avec ledit paramètre biométrique actuel (P_{C}) dans ledit moyen de stockage ;
lequel document d'identification électronique (100) présente une séparation en une première (A) et une seconde (B) partie, dans lequel ladite première partie (A) est porteuse desdits moyens formant capteurs (101), desdits moyens de communication (102), de ladite unité de commande (103) et de ladite unité d'alimentation (104), et ladite seconde partie (B) est porteuse dudit processeur (201),
dans lequel ladite seconde partie (B) est porteuse d'un moyen supplémentaire de stockage de données d'identification du titulaire du document lui-même et/ou de clés d'accès à des fins d'interaction avec le dispositif distant (301),
et dans lequel ladite unité de commande (103) est conçue pour permettre une activation desdits moyens de communication (102) entre ladite première (A) et ladite seconde (B) partie et/ou entre ladite seconde partie (B) et le dispositif distant (301) à ladite étape (b).

2. Document d'identification électronique (100) selon la revendication 1, dans lequel ledit moyen de communication (102) comprend une antenne et/ou un circuit radioélectrique(s).

3. Document d'identification électronique (100) selon la revendication 1 ou 2, dans lequel lesdits moyens de communication (102) sont conçus pour alimenter ledit moyen de traitement (103) et/ou lesdits moyens formant capteurs (101).

4. Document d'identification électronique (100) selon l'une quelconque des revendications précédentes, dans lequel ledit paramètre biométrique de référence (P_{R}) et ledit paramètre biométrique actuel (P_{C}) sont représentatifs d'un ou de plusieurs des éléments suivants : empreinte digitale, iris, rétine, voix, image faciale, résistance de la peau, signature manuscrite.

5. Document d'identification électronique (100) selon l'une quelconque des revendications précédentes, dans lequel ledit moyen de stockage (103) est conçu pour stocker au moins une paire de paramètres biométriques de référence distincts (P_{R}) et dans lequel lesdites étapes (a) à (c) sont réalisées par rapport à chacun desdits paramètres biométriques de référence (P_{R}) et à une paire respective de paramètres biométriques actuels (P_{C}).

6. Document d'identification électronique (100) selon l'une quelconque des revendications précédentes, dans lequel ledit moyen formant capteur comprend un moyen de détection de deux paramètres biométriques actuels corrélés, par exemple une résistance de peau numérique et une différence de température entre des crêtes et des vallées d'une empreinte digitale correspondante.

7. Document d'identification électronique (100) selon la revendication précédente, dans lequel ledit moyen de traitement (103) est conçu pour exécuter une authentification croisée desdits paramètres biométriques actuels corrélés.

8. Document d'identification électronique (100) selon l'une quelconque des revendications précédentes, qui se présente sous la forme d'une carte et dans lequel ledit moyen formant capteur (101) comprend un premier (1015) et un second (1016) détecteur d'empreinte digitale, placés sur des côtés opposés.

9. Document d'identification électronique (100) selon l'une quelconque des revendications précédentes, qui se présente sous la forme d'une carte et dans lequel ledit moyen formant capteur (101) comprend un détecteur d'empreinte digitale (1017) et un détecteur de signature manuscrite (1018), placés de préférence sur le même côté.

10. Document d'identification électronique (100) selon l'une quelconque des revendications 1 à 9, qui se présente sous la forme d'un livret et dans lequel ledit moyen formant capteur (101) comprend une pluralité de détecteurs d'empreintes digitales (1011 à 1014) placés sur une couverture arrière.

11. Système d'identification comprenant :
▪ un document d'identification électronique (100) selon l'une quelconque des revendications précédentes ; et
▪ un dispositif distant (301) conçu pour lire des données sur ledit document d'identification électronique (100), y écrire des données et/ou l'alimenter.

12. Système d'identification selon la revendication précédente, dans lequel le dispositif distant est conçu pour :
▪ fournir de l'énergie radioélectrique aux moyens de communication (102) dudit document d'identification électronique (100) afin de permettre l'activation desdits moyens formant capteurs (101) ;
▪ établir une connexion avec ledit processeur (201) afin d'échanger des données et/ou des informations ; et
▪ réaliser des opérations de lecture/écriture de données sur lesdits moyens de communication (102) et/ou ladite unité de commande (103) et/ou ledit processeur (201).
